# EUROPÄISCHE PATENTSCHRIFT

(11) **EP 3 000 357 B1**
(45) Veröffentlichungstag und Bekanntmachung des Hinweises auf die Patenterteilung: **18.01.2023**
(21) Anmeldenummer: 15184809.0
(22) Anmeldetag: 11.09.2015
(51) Int. Cl.: A47C 4/02, F16B 12/20, A47C 7/42, A47C 7/54, A47C 13/00, F16B 12/60

(54) **MÖBEL UND MÖBELBESCHLAG ZUR VERBINDUNG VON MÖBELTEILEN**
FURNITURE AND FURNITURE FITTING FOR JOINTING OF FURNITURE PARTS
MEUBLE ET QUINCAILLERIE DESTINEE A ASSEMBLER DES PARTIES DE MEUBLE

(30) Priorität: 26.09.2014 DE 102014114045
(43) Veröffentlichungstag der Anmeldung: 30.03.2016
(73) Patentinhaber: Hettich Franke GmbH & Co. KG, 72336 Balingen-Weilstetten (DE)
(72) Erfinder: STRAUß, Gerd, 72474 Winterlingen (DE); NILL, Oliver, 72379 Hechingen (DE); SCHWETTMANN, Eike, 32609 Hüllhorst (DE)
(74) Vertreter: Kleine, Hubertus

(56) Entgegenhaltungen:
- EP-A1- 1 110 485
- DE-U1-202014 100 019
- US-A- 4 402 117
- US-A1- 2014 079 511

## Beschreibung

Die Erfindung betrifft einen Möbelbeschlag zur Verbindung von Möbelteilen, insbesondere von Polstermöbeln, mit einem an einem ersten Möbelteil befestigbaren Grundelement und einer an einem zweiten Möbelteil befestigbaren Deckplatte, wobei das Grundelement eine Grundplatte aufweist, an der ein hervorstehendes Spannelement drehbar befestigt. Die Deckplatte weist eine Aussparung auf, wobei das Spannelement in zumindest einer Drehstellung beim Aufeinanderfügen von Grundelement und Deckplatte zumindest teilweise durch die Aussparung ragt und wobei das Spannelement nach einer Verdrehung die Deckplatte im Bereich der Ränder der Aussparung zumindest abschnittsweise übergreift und so die Deckplatte form- und kraftschlüssig mit dem Grundelement verbindet. Es ist ein seitlich über das Grundelement hinausragender Schwenkhebel vorgesehen, der drehfest mit dem Spannelement gekoppelt ist. Die Erfindung betrifft weiterhin ein Möbel mit mindestens zwei Möbelteilen.

Zur Verbindung von größeren Möbelteilen wie beispielsweise Sitzteilen, Rückenteilen oder Seitenteilen eines Polstermöbels werden häufig Steckverbindungen eingesetzt. Nachteilig bei derartigen Steckverbindungen ist, dass sie bei Bewegung der Möbelteile entgegen der Fügerichtung beim Verbinden wieder gelöst wird. Alternativ oder zusätzlich werden bei derartigen großen Möbelteilen von außen aufgebrachte Verbindungslaschen verwendet, was aufgrund von Verletzungsgefahren und aus Designgründen jedoch nur in nicht sichtbaren Bereichen, beispielsweise an einer Unterseite eines Sofas, möglich ist.

Aus der Druckschrift DE 10 2005 023 124 A1 ist eine Steck-Dreh-Verbindung zwischen einem Funktionselement, beispielsweise einem Bolzen oder einem Gewindeträger, und einem plattenförmigen Trägerbauteil beschrieben. Die Steck-Dreh-Verbindung kann eingesetzt werden, um die genannten Funktionselemente verdeckt festzulegen. Das Funktionselement wird dabei in eine topfförmige Aufnahmemulde des Trägerbauteils eingesteckt und dort durch eine Drehbewegung mit einem Bajonettverschluss festgelegt. Diese Art der verdeckten Verbindung ist für große Möbelteile ungeeignet, da mit großen Möbelteilen im Regelfall keine Drehbewegung beim Verbinden ausgeführt werden kann. Zudem verhindert die Drehbewegung, dass zwei zu verbindende Möbelteile mit mehr als einem Möbelbeschlag miteinander verbunden werden können, was für große Möbelteile jedoch üblicherweise notwendig ist.

Die Druckschrift DE 20 2014 100 019 U1 beschreibet einen Möbelbeschlag, bei dem ein Grundelement und eine Deckplatte an jeweils einem von zwei miteinander lösbar zu verbindenden Möbelteilen befestigt wird. Über ein verdrehbares Spannelement, das nach einer Verdrehung die Deckplatte abschnittsweise im Bereich einer Aussparung übergreift, können die Deckplatte und eine Grundplatte des Grundelements und damit die beiden Möbelteile form- und kraftschlüssig miteinander verbunden werden. Zur Verdrehung des Spannelements ist dieses mit einem axial angeordneten knebelartigen Griff verbunden. Ein ähnlicher Möbelbeschlag ist auch aus der Druckschriften US 4,402,117 A bekannt.

Die Druckschrift EP 1 110 485 A1 beschreibt einen Möbelbeschlag, mit dem zwei nebeneinander liegende Möbelteil verbunden werden können. Dazu werden auf beide Möbelteile in einer Ebene nebeneinander Platten befestigt, von denen eine mit einem überstehenden Riegel die andere Platte überlappt. Im Überlappungsbereich wird der Riegel mit Hilfe eines Knebels an der unterliegenden Platte befestigt. Der Knebel ist dazu mit einem exzentrischen Element verbunden, das durch eine Bohrung in der unterliegenden Platte geführt wird und dort durch Drehung des Knebels eingreift. Der Beschlag ist allerdings nicht für eine verdeckte Verbindung von übereinander liegenden Platten geeignet.

Es ist eine Aufgabe der vorliegenden Erfindung, einen Möbelbeschlag für Möbelteile, insbesondere große Möbelteile von Polstermöbeln, zu schaffen, der eine auch entgegen der Fügerichtung belastbare und verdeckte Verbindung schafft, die möglichst werkzeuglos einfach hergestellt und auch wieder gelöst werden kann.

Diese Aufgabe wird durch einen Möbelbeschlag bzw. ein Möbel mit den Merkmalen des jeweiligen unabhängigen Anspruchs gelöst. Vorteilhafte Ausgestaltungen und Weiterbildungen sind in den abhängigen Ansprüchen angegeben.

Bei einem erfindungsgemäßen Möbelbeschlag der eingangs genannten Art sind das Spannelement und der Schwenkhebel mittels eines Niets drehbar an der Grundplatte gelagert und über den Niet drehfest miteinander gekoppelt, wobei der Niet einen Mehrkantabschnitt aufweist und durch Mehrkantöffnungen des Spannelements und des Schwenkhebels geführt ist.

Über den Schwenkhebel kann das Spannelement verdreht und damit die Verbindung von Grundelement und Deckplatte hergestellt bzw. wieder gelöst werden. Der Möbelbeschlag kann so bevorzugt zur Verbindung von Polstermöbelteilen eingesetzt werden, wobei der Möbelbeschlag im Polsterspalt zwischen den Möbelteilen verdeckt ist und gleichzeitig durch Eingriff in den Polsterspalt der Schwenkhebel bequem betätigt werden kann.

Durch das drehbar auf der Grundplatte des Grundelementes befestigte Spannelement können das Grundelement und die Deckplatte, die jeweils an den zu verbindenden Möbelteilen montiert sind, durch eine reine Translationsbewegung zusammen gefügt werden und danach durch eine Verdrehung des Spannelements miteinander verbunden werden. Da eine reine Translationsbewegung als Fügebewegung erfolgt, können mehrere derartige Möbelbeschläge zur Verbindung von zwei Möbelteilen an diesen befestigt sein. Die Verbindung kann durch ein Zurückdrehen des Spannelements in die Ausgangsposition, nachfolgend auch entriegelte Position genannt, wieder getrennt werden.

In einer vorteilhaften Ausgestaltung des Möbelbeschlags ist ein seitlich über das Grundelement hinausragender Schwenkhebel vorgesehen, der drehfest mit dem Spannelement gekoppelt ist. Über den Schwenkhebel kann das Spannelement verdreht und damit die Verbindung von Grundelement und Deckplatte hergestellt bzw. wieder gelöst werden. Ein derartiger Möbelbeschlag kann bevorzugt zur Verbindung von Polstermöbelteilen eingesetzt werden, wobei der Möbelbeschlag im Polsterspalt zwischen den Möbelteilen verdeckt ist und gleichzeitig durch Eingriff in den Polsterspalt der Schwenkhebel bequem betätigt werden kann.

Die Auslegung des Möbelbeschlags und seine Anordnung an dem Möbel erfolgt bevorzugt so, dass der Schwenkhebel nach der Montage nicht mehr sichtbar ist. Entsprechend ist der Schwenkhebel so ausgebildet, dass er im Schließzustand möglichst gut an dem Grundelement anliegt. Alternativ kann der Schwenknebel aber auch als bewusst sichtbares Designelement ausgebildet sein.

In einer ebenfalls bevorzugten Weiterbildung ist eine bevorzugt als geprägte Sicke ausgebildete erhöhte Auflagefläche an der Grundplatte vorhanden, bevorzugt in einem Randbereich der Grundplatte, wobei zumindest ein Schwenkbereich des Schwenkhebels ausgespart ist. Die Deckplatte liegt bei dieser Ausgestaltung bei gefügter Verbindung auf der erhöhten Auflage auf. Im Schwenkbereich des Hebels ist so ein Spalt zwischen Deckplatte und Grundplatte gebildet, in dem der Schwenkhebel bewegbar ist. Bei Auflage der Deckplatte nur in einem Randbereich der Grundplatte kann der mittlere Bereich der Deckplatte gegenüber der Grundplatte einfedern, wodurch eine kraftschlüssige und Toleranzen ausgleichende Verspannung der beiden Platten zueinander erzielt wird.

In einer weiteren vorteilhaften Ausgestaltung des Möbelbeschlags sind Anlaufschrägen an dem Spannelement und/oder der Aussparung der Deckplatte vorgesehen. Beim Schließen der Verbindung zwischen Grundelement und Deckplatte wechselwirken die Anlaufschrägen miteinander, wodurch das Spannelement auch eine nicht vollständig auf dem Grundelement aufliegende Deckplatte greifen und auf das Grundelement heranziehen kann. Bei weiterer Drehbewegung des Spannelements wird eine Verspannung zwischen Spannelement und damit Grundelement und Deckplatte erreicht, wodurch eine feste und belastbare Verbindung der beiden Bauteile gegeben ist. In einer bevorzugten Ausgestaltung ist mindestens eine Seitenkante der Aussparung der Deckplatte und/oder des Spannelements mit einer Fase versehen, um eine Anlaufschräge zu bilden. In einer weiteren vorteilhaften Ausgestaltung weist das Spannelement mindestens einen radial nach außen weisenden Spannflügel auf, der angeschrägt und/oder gegenüber der Grundplatte schräg gestellt ist, um eine Anlaufschräge zu bilden. Die Anschrägung kann dabei durch eine Fase an mindestens einer Seitenkante des Spannflügels gebildet sein. Eine Schrägstellung kann beispielsweise durch eine Abkantung eines Teils des Spannflügels gebildet sein.

In einer weiteren vorteilhaften Ausgestaltung des Möbelbeschlags ist an der Grundplatte mindestens ein hervorstehender Zentrierbolzen angeordnet, der in einer Fügeposition in korrespondierende Bohrungen der Deckplatte dringt. Der Zentrierbolzen nimmt im verbundenen Zustand von Grundelement und Deckplatte zwischen diesen wirkende Querkräfte auf. Bevorzugt ist der mindestens eine Zentrierbolzen an seinem freien Ende verjüngt, wodurch sich die Deckplatte und das Grundelement beim Aufeinanderfügen selbständig zueinander ausrichten. Weiter bevorzugt sind mindestens zwei Zentrierbolzen vorgesehen, wodurch ein zwischen Grundelement und Deckplatten wirkendes Drehmoment im verbundenen Zustand aufgenommen wird und so eine drehfeste Verbindung zwischen Grundelement und Deckplatte geschaffen ist.

Um eine lagerichtige Positionierung zweier Möbelteile zu erreichen, können die Deckplatten und die Grundplatten mit Prägungen beziehungsweise Durchzüge versehen werden, die sich in entsprechend angebrachte Öffnungen beziehungsweise Bohrungen in den Möbelteilen fügen lassen.

Bei einem erfindungsgemäßen Möbel mit mindestens zwei Möbelteilen ist wenigstens ein derartiger Möbelbeschlag zur Verbindung der mindestens zwei Möbelteile vorgesehen. Es ergeben sich unter anderem die zuvor genannten im Zusammenhang mit dem Möbelbeschlag genannten Vorteile. Da zum Zusammensetzen der Möbelteile kein Eingriff in das Innere des Möbels erforderlich ist, ermöglicht der erfindungsgemäße Möbelbeschlag zudem ein vollständiges Polstern der einzelnen Möbelteile vor dem Zusammensetzen der einzelnen Möbelteile zum kompletten Möbel.

Die Erfindung wird nachfolgend anhand von Ausführungsbeispielen mithilfe von Figuren näher erläutert. Die Figuren zeigen:
- Fig. 1: eine perspektivische schematische Explosionsdarstellung eines Möbels mit mehreren Möbelteilen und Verbindungsbeschlägen;
- Fig. 2: eine perspektivische Explosionsdarstellung eines Möbelbeschlag in einem ersten Ausführungsbeispiel;
- Fig. 3: eine Draufsicht auf den Möbelbeschlag der Fig.2 in einem entriegelten Zustand;
- Fig. 4: eine Draufsicht auf den Möbelbeschlag der Fig.2 in einem verriegelten Zustand;
- Fig. 5, 6: jeweils eine Seitenansicht des Möbelbeschlags des ersten Ausführungsbeispiels aus verschiedenen Blickrichtungen und
- Fig. 7: eine perspektivische Ansicht eines Möbelbeschlags in einem zweiten Ausführungsbeispiel

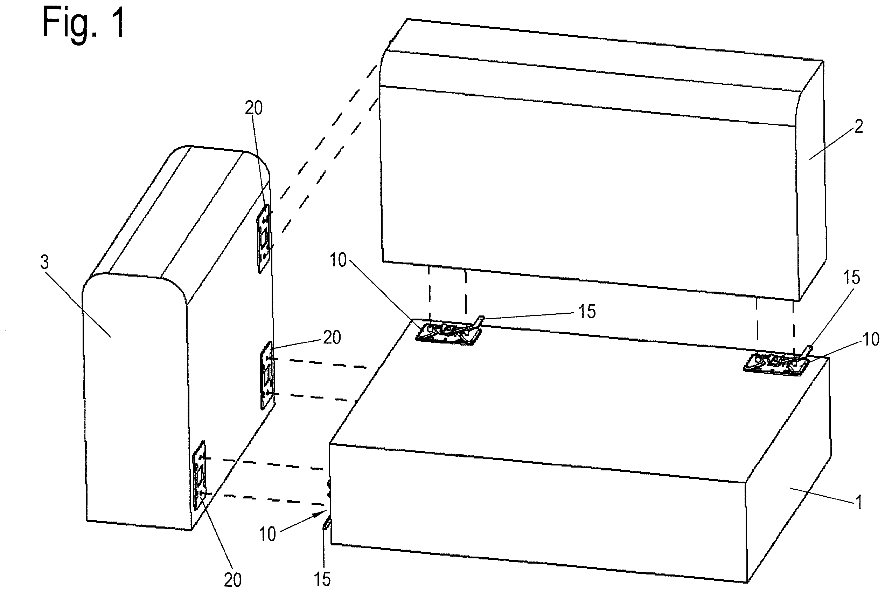

Fig. 1 zeigt in einer perspektivischen schematischen Zeichnung ein aus mehreren Möbelteilen zusammengesetztes Sitzmöbel. Dargestellt ist ein Sofa mit einem Sitzteil 1, einer Rückenlehne 2 und einem Seitenteil 3. Zur Verbindung der einzelnen Möbelteile sind Möbelbeschläge vorgesehen, die jeweils ein Grundelement 10 und eine Deckplatte 20 aufweisen. Das Grundelement 10 ist jeweils an einem der Möbelteile befestigt, beispielsweise mithilfe von Schrauben, und die dazugehörige Deckplatte 20 an einem anderen der Möbelteile.

Zum Zusammensetzen des gezeigten Möbels wird die Rückenlehne 2 auf das Sitzteil 1 entlang der dargestellten gestrichelten Linie abgesenkt, wodurch die an der Unterseite der Rückenlehne 2 angeordneten und in der Fig. 1 nicht sichtbaren an der Rückenlehne 2 montierten Deckplatten 20 mit den am Sitzteil 1 montierten Grundelementen 10 aufeinandergefügt werden. An den Grundelementen 10 sind Schwenkhebel 15 angeordnet, die nach dem Aufsetzen der Rückenlehne 2 auf das Sitzteil 1 aus dem Spalt zwischen den beiden Möbelteilen herausragen. Ein Verschwenken der Schwenkhebel 15 verspannt die Deckplatten 20 gegenüber den Grundelementen 10 und legt so die Rückenlehne 2 am Sitzteil 1 fest. Beim Betätigen der Schwenkhebel 15 schwenken diese in den Polsterspalt zwischen dem Sitzteil 1 und der Rückenlehne 2 ein, sodass der gesamte Möbelbeschlag nicht mehr sichtbar zwischen den Möbelteilen verdeckt angeordnet ist.

Nach dem Verbinden von Sitzteil 1 und Rückenlehne 2 wird das Seitenteil 3 entlang der im unteren Bereich dargestellten Verbindungslinien auf die Einheit aus Sitzteil 1 und Rückenlehne 2 zubewegt. Die drei Deckplatten 20, die am Seitenteil 3 montiert sind, werden dadurch auf die zugehörigen Grundelemente 10 gefügt und wiederum durch Betätigung der Schwenkhebel 15 arretiert.

Es versteht sich, dass die Anzahl der zur Verbindung der Möbelteile verwendeten Möbelbeschläge je nach Belastung variieren kann.

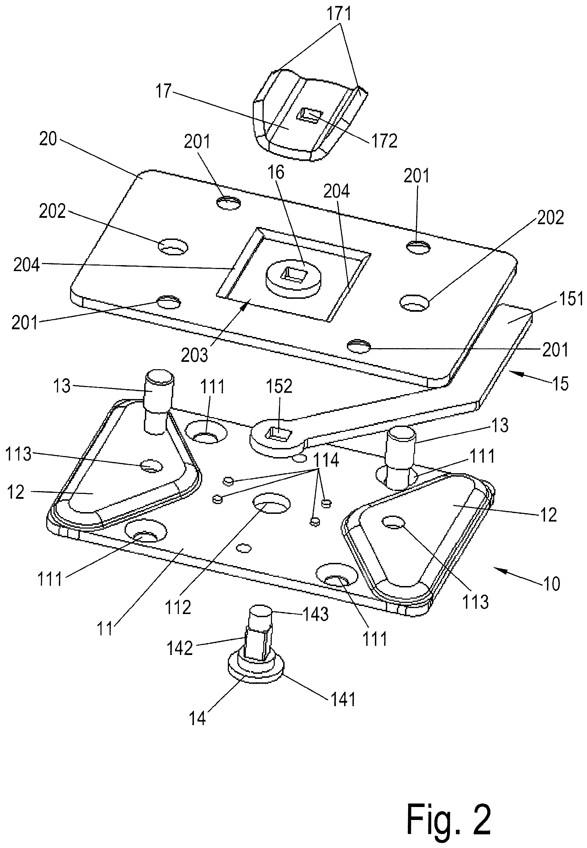

In Fig. 2 ist ein Möbelbeschlag, wie er bei dem Beispiel der Fig. 1 verwendet wird, detaillierter in einer perspektivischen Explosionszeichnung dargestellt.

Das Grundelement 10 weist eine Grundplatte 11 auf, in die Montagelöcher 111 zur Befestigung des Grundelements 10 an einem Möbelteil eingebracht sind. Die Montagelöcher 111 sind vorliegend mit einer Versenkung für Senkkopfschrauben ausgebildet.

Die Grundform der Grundplatte 11 ist im dargestellten Ausführungsbeispiel rechteckig, wobei im Bereich der kürzeren Querseiten erhöhte Auflagen 12 als Auflageflächen für die Deckplatte 20 auf die Grundplatte 11 aufgebracht sind.

Die Grundplatte 11 ist bevorzugt aus Blech in einem Stanzverfahren gefertigt. Die erhöhten Auflagen 12 können bevorzugt während des Stanzverfahrens als Sicken geprägt werden. Alternativ können die erhöhten Auflagen 12 auch als separate Blechelemente auf der Grundplatte 11 verschweißt werden oder als separate Kunststoffelemente, beispielsweise in einem Spritzgussverfahren gefertigt, auf die Grundplatte 11 aufgeklebt werden. Im Bereich der erhöhten Auflagen 12 ist eine Bohrung 113 durch die erhöhten Auflagen 12 und die Grundplatte 11 eingebracht, in die jeweils ein Zentrierbolzen 13 eingesteckt und mit der Grundplatte 11 verbunden, beispielsweise vernietet wird. Die Zentrierbolzen stellen in dem Fall, wo die erhöhten Auflagen 12 als separate Elemente ausgebildet sind, eine zusätzliche Befestigung für die erhöhten Auflagen 12 dar. Der Zentrierbolzen 13 steht im Wesentlichen senkrecht zur Oberfläche der Grundplatte 11 und der erhöhten Auflage 12 hervor.

Mittig in der Grundplatte 11 ist eine Lagerbohrung 112 angeordnet, in die von der Unterseite der Grundplatte 11 her ein Niet 14 eingesteckt wird, der mit einem seitlich überstehenden Rand 141 an der Unterseite der Grundplatte 11 anliegt und sich in der Lagerbohrung 112 frei drehen kann. Von der Oberseite der Grundplatte 11 her ist auf den Niet 14 ein Schwenkhebel 15, eine Distanzscheibe 16 und ein Spannelement 17 aufgesetzt. Der aufgesetzte Schwenkhebel 15 ragt mit einem Griff 151 seitlich über die Fläche des Grundelementes 10 hinaus. Im dargestellten Ausführungsbeispiel ist der Schwenkhebel 15 winklig ausgeführt. Der Niet 14 ist durch eine Mehrkantöffnung 152 des Hebels gesteckt und ist im Kontaktbereich mit dem Schwenkhebel 15 ebenfalls mit einem Mehrkantabschnitt 142 ausgebildet. Der Schwenkhebel 15 und der Niet 14 sind auf diese Weise drehfest miteinander gekoppelt.

Das Spannelement 17 ist im dargestellten Ausführungsbeispiel ein in einem Stanzbiegeprozess hergestelltes Blechelement, das einen ebenen Mittelbereich aufweist, in dem sich eine zentrale Mehrkantöffnung 172 befindet. Zu zwei gegenüberliegenden Seiten hin sind äußere Abschnitte des Spannelements 17 schräg nach oben gebogen. Diese Abschnitte werden nachfolgend als Spannflügel 171 bezeichnet. Die Mehrkantöffnung 172 des Spannelements17 liegt ebenfalls im Bereich des Mehrkantabschnitt 142 des Niets 14, sodass das Spannelement 17 drehfest mit dem Niet 14 und damit drehfest mit dem Schwenkhebel 15 verbunden ist. Nach Aufsetzen des Spannelements 17 wird der Niet 14 im Bereich eines nach oben aus dem Spannelement 17 ragenden Nietkopfs 143 verprägt.

Im Bereich der Lagerbohrung 112 sind an der Grundplatte 11 leicht hervorstehende Anschläge 114 angeordnet, die den Schwenkbereich des Schwenkhebels 15 begrenzen. Die Anschläge 114 erleichtern das korrekte Einstellen der optimalen Entriegelungsposition und Verrieglungsposition.

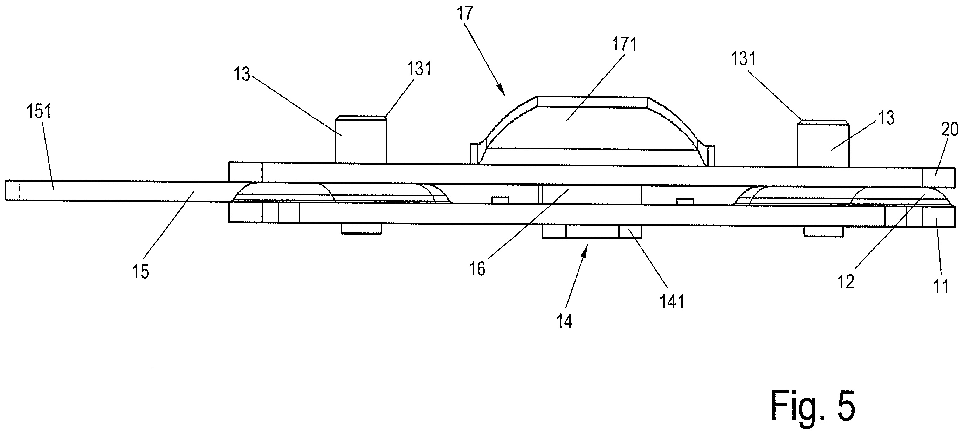

Neben dem Grundelement 10 weist der Möbelbeschlag die Deckplatte 20 auf, die mit dem Grundelement 10 lösbar verbunden werden kann. Die Deckplatte 20 hat vorliegend dieselben Außenabmessungen wie die Grundplatte 11 und ist ebenfalls als ein Stanzteil aus Blech gefertigt. Sie weist Montagelöcher 201 auf, mit der die Deckplatte 20 wie die Grundplatte 11 an einem Möbelteil befestigt werden kann. Weiterhin sind in die Deckplatte 20 Zentrieröffnungen 202 eingebracht, in die beim Zusammenfügen der Deckplatte 20 auf das Grundelement 10 die Zentrierbolzen 13 dringen. Um das Zusammenfügen von Deckplatte 20 und Grundelement 10 zu vereinfachen, können die Zentrierbolzen 13 im Bereich ihres freien Endes verjüngt sein, beispielsweise indem sie eine umlaufende Fase 131 am oberen Rand aufweisen (vgl. Fig. 5). Auch eine sich über einen längeren Abschnitt des Zentrierbolzens 13 erstreckende Verjüngung ist möglich.

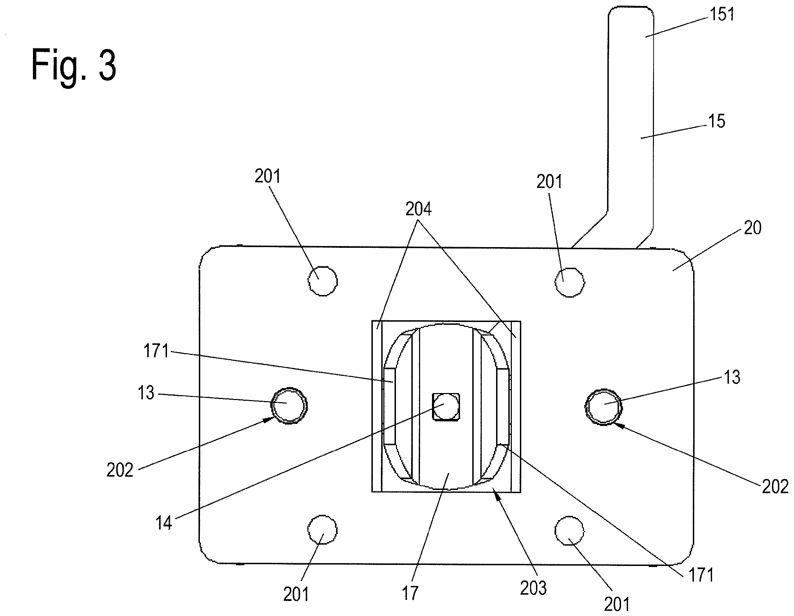

Fig. 3 zeigt den Möbelbeschlag aus Fig. 2 in einer Draufsicht nach dem Aufeinanderfügen von Deckplatte 20 auf das Grundelement 10. In der gezeigten Drehstellung des Spannelements 17 ragt dieses zumindest teilweise (im Hinblick auf seine Höhe) durch eine Aussparung 203 der Deckplatte 20 hindurch. Die Aussparung 203 ist im dargestellten Ausführungsbeispiel rechteckig und so dimensioniert, dass das Spannelement 17 mit seinen Spannflügeln 171 in der dargestellten Drehstellung des Spannelements 17 gerade durch die Aussparung 203 passt.

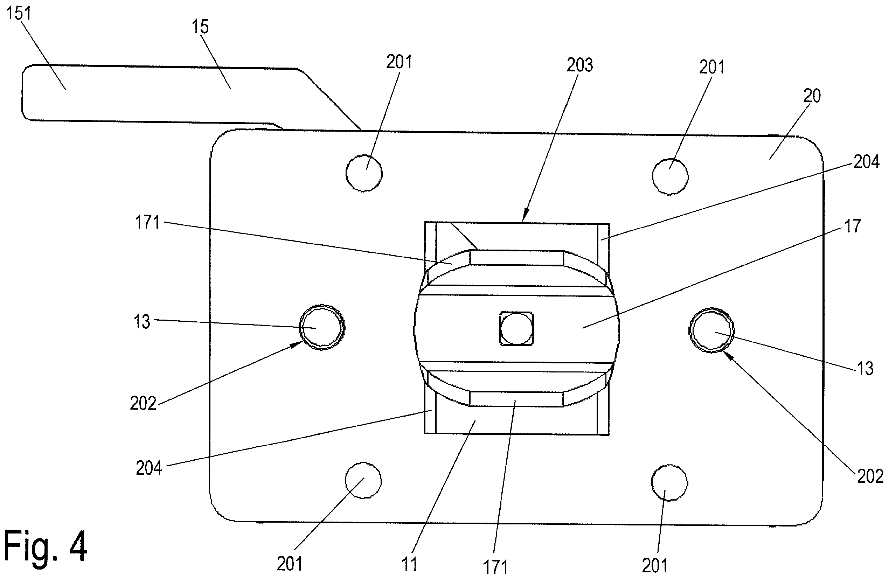

Zum Verbinden der Deckplatte 20 mit dem Grundelement 10 wird der Schwenkhebel 15 in diesem Ausführungsbeispiel um 90° verschwenkt und nimmt dann die in Fig. 4 dargestellte Stellung ein. Die Schwenkbewegung des Schwenkhebels 15 führt zu einer entsprechenden Drehung des Spannelements 17. Durch die Drehung übergreifen Abschnitte des Spannelements 17 die Deckplatte 20 im Bereich der Ränder der Aussparung 203.

Bei der Drehbewegung des Spannelements 17 laufen zunächst die schräg stehenden Spannflügel 171 des Spannelements 17 auf Seitenkanten der Aussparung 203 auf. Um dieses Auflaufen zu unterstützen, sind die entsprechenden Seitenkanten im dargestellten Ausführungsbeispiel mit einer Fase 204 versehen. Die angefaste Seitenkante sowie die schräg stehenden Spannflügel 171 bilden so Anlaufschrägen, durch die beim Aufeinanderlaufen die Deckplatte 20 in Richtung der Grundplatte 11 gedrückt wird.

Da die Deckplatte 20 nur in ihrem äußeren Bereich auf den erhöhten Auflagen 12 aufliegt, können sich die Deckplatte 20 und im gewissen Maße auch die Grundplatte 11 leicht federnd durchbiegen und werden so durch das Spannelement 17 gegeneinander verspannt. Durch die Federwirkung der Deckplatte 20 und gegebenenfalls der Grundplatte 11 ist zudem ein Toleranzausgleich gegeben, falls die Höhe des Niets 14 sowie die Dicke des Spannhebels 15 und/oder der Distanzscheibe 16 materialbedingte Toleranzen aufweisen.

Der durch das Übergreifen des Spannelements 17 auf die Deckplatte 20 erreichte Formschluss nimmt axial entlang der Drehachse des Spannelements 17 wirkende Kräfte auf. Die durch das Verspannen zusätzlich kraftschlüssige Verbindung zwischen der Deckplatte 20 und dem Grundelement 10 nimmt zudem zwischen dem Grundelement 10 und der Deckplatte 20 wirkende Querkräfte auf. Diese werden zusätzlich durch die Zentrierbolzen 13 aufgefangen. Zusammenfassend wird mit dem anmeldungsgemäßen Möbelbeschlag eine verdeckte Verbindung von großen Möbelteilen erzielt, die Kräfte und Drehmomente in jeder Richtung aufnehmen kann. Die Verbindung kann zudem problemlos und ohne Werkzeug mehrfach gelöst und wieder hergestellt werden.

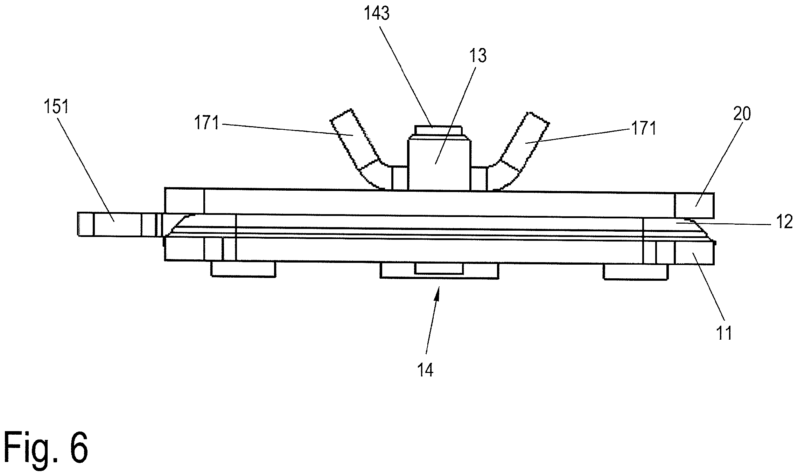

In den Fig. 5 und 6 ist der Möbelbeschlag der Fig. 4 im verriegelten Zustand nochmals jeweils in einer Seitenansicht dargestellt, wobei Fig. 5 eine Ansicht auf die Längsseite der Grundplatte 11 bzw. der Deckplatte 20 darstellt und Fig. 6 eine Ansicht auf die kürzere Querseite der Deckplatte 20 bzw. der Grundplatte 11.

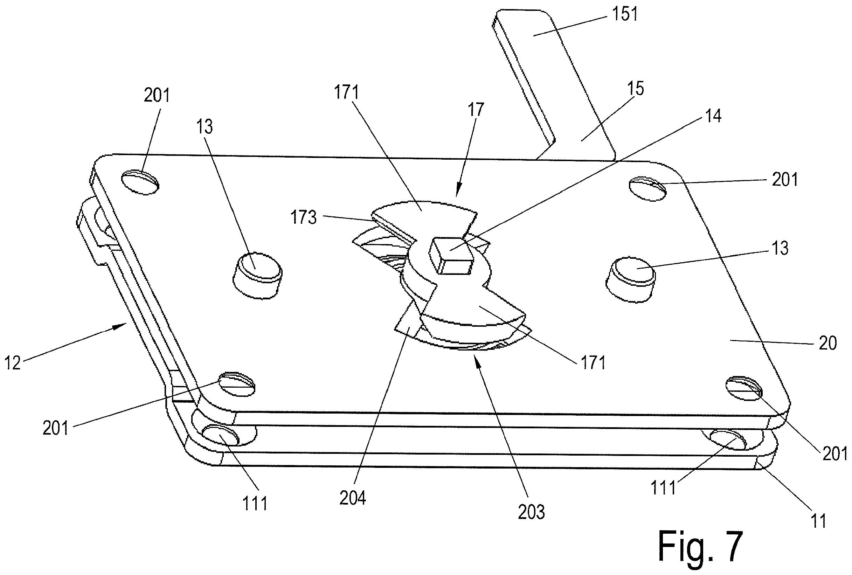

In Fig. 7 ist ein zweites Ausführungsbeispiel eines anwendungsgemäßen Möbelbeschlags dargestellt. Gleiche Bezugszeichen kennzeichnen in dieser Figur gleiche oder gleichwirkende Elemente wie bei den voranstehenden Figuren. Auch bei diesem Ausführungsbeispiel ist eine im Wesentlichen rechteckige Grundplatte 11 für das Grundelement 10 und eine Deckplatte 20 der gleichen Form verwendet. Wiederum sind Montagelöcher 111 bzw. 201 vorgesehen, sowie Zentrierbolzen 13, die mit der Grundplatte 11 verbunden sind und die im zusammengefügten Zustand von Deckplatte 20 und Grundplatte 11 durch entsprechende Zentrieröffnungen 202 der Deckplatte 20 ragen.

Ebenfalls wie beim ersten Ausführungsbeispiel ist eine als Sicke ausgebildete erhöhte Auflage 12 vorgesehen, die eine Auflagefläche für die Deckplatte 20 bildet. Die Sicke 12 ist durch eine hervorstehende Prägung der Grundplatte 11 gebildet, kann aber, wie im ersten Ausführungsbeispiel bereits erwähnt, auch durch ein separates Element gebildet werden.

Ebenfalls analog zum ersten Ausführungsbeispiel ist ein Spannelement 17 vorgesehen, das auf einem Niet 14 drehbar an der Grundplatte 11 gelagert ist. Drehfest mit dem Niet 14 und damit dem Spannelement 17 ist ein seitlicher herausragender Schwenkhebel 15 verbunden.

Ein Unterschied zum ersten Ausführungsbeispiel besteht in der Ausgestaltung des Spannelements 17 und der Aussparung 203, durch die das Spannelement 17 ragt. Das Spannelement 17 hat vorliegend die Form einer Fliege, bei der ausgehend von einem mittleren runden Abschnitt zwei sich radial nach außen erstreckende kreissegmentförmige Spannflügel 171 gegenüberstehen. Dabei sind die Seitenkanten der Spannflügel 171 mit einer Fase 173 versehen. Denkbar ist natürlich auch, das Spannelement mit nur einem sich radial nach außen erstreckenden kreissegmentförmigen Spannflügel zu versehen.

Die Aussparung 203 der Deckplatte 20 ist in ihrer Form dem Spannelement 17 angepasst. Wie beim ersten Ausführungsbeispiel sind auch hier Seitenkanten der Aussparung 203 mit einer Fase 204 versehen. Die Fase 173 an der Aussparung 203 und die Fase 204 der Seitenkanten bilden wiederum Anlaufschrägen, die bei einer Verdrehung des Spannelements 17 aus der in der Fig. 7 gezeigten Drehstellung aufeinander auflaufen, wodurch die Deckplatte 20 auf das Grundelement 10 gepresst wird.

### Bezugszeichenliste

- 1: Sitzteil
- 2: Rückenlehne
- 3: Seitenteil

- 10: Grundelement
- 11: Grundplatte
- 111: Montageloch
- 112: Bohrung für Niet
- 113: Bohrung für Zentrierbolzen
- 114: Anschlag
- 12: Auflage / Sicke
- 13: Zentrierbolzen
- 131: Fase
- 14: Niet
- 141: überstehender Rand
- 142: Mehrkantabschnitt
- 143: Nietkopf
- 15: Schwenkhebel
- 151: Griff
- 152: Mehrkantöffnung
- 16: Distanzscheibe
- 17: Spannelement
- 171: Spannflügel
- 172: Mehrkantöffnung
- 173: Fase

- 20: Deckplatte
- 201: Montageloch
- 202: Zentrieröffnung
- 203: Aussparung
- 204: Fase

## Patentansprüche

1. Möbelbeschlag zur Verbindung von Möbelteilen, insbesondere von Polstermöbeln, mit einem an einem ersten Möbelteil befestigbaren Grundelement (10) und einer an einem zweiten Möbelteil befestigbaren Deckplatte (20), wobei
- das Grundelement (10) eine Grundplatte (11) aufweist, an der ein hervorstehendes Spannelement (17) drehbar befestigt ist und
- die Deckplatte (20) eine Aussparung (203) aufweist, wobei
- das Spannelement (17) in zumindest einer Drehstellung beim Aufeinanderfügen von Grundelement (10) und Deckplatte (20) zumindest teilweise durch die Aussparung (203) ragt, und wobei
- das Spannelement (17) nach einer Verdrehung die Deckplatte (20) im Bereich der Aussparung (203) zumindest abschnittsweise übergreift und so die Deckplatte (20) form- und kraftschlüssig mit dem Grundelement (10) verbindet,
wobei mit dem Spannelement (17) ein seitlich über das Grundelement (10) hinausragenden Schwenkhebel (15) drehfestgekoppelt ist,
**dadurch gekennzeichnet, dass**
das Spannelement (17) und der Schwenkhebel (15) mittels eines Niets (14) drehbar an der Grundplatte (11) gelagert sind und über den Niet (14) drehfest miteinander gekoppelt sind, wobei der Niet (14) einen Mehrkantabschnitt (142) aufweist und durch Mehrkantöffnungen (172, 152) des Spannelements (17) und des Schwenkhebels (15) geführt ist.

2. Möbelbeschlag nach Anspruch 1, bei dem mindestens eine erhöhte Auflage (12) für die Deckplatte (20) an der Grundplatte (11) vorhanden ist.

3. Möbelbeschlag nach Anspruch 2, bei dem die erhöhte Auflage (12) in einem Randbereich der Grundplatte (11) ausgebildet ist, wobei zumindest ein Schwenkbereich des Schwenkhebels (15) ausgespart ist.

4. Möbelbeschlag nach einem der Ansprüche 1 bis 3, bei dem Anlaufschrägen an dem Spannelement (17) und/oder der Aussparung (203) der Deckplatte (20) vorgesehen sind.

5. Möbelbeschlag nach Anspruch 4, bei dem mindestens eine Seitenkante der Aussparung (203) und/oder des Spannelements (17) mit einer Fase (204, 173) versehen ist.

6. Möbelbeschlag nach Anspruch 4 oder 5, bei dem das Spannelement (17) mindestens einen radial nach außen weisenden Spannflügel (171) aufweist, der angeschrägt und/oder gegenüber der Grundplatte (11) schräg gestellt ist.

7. Möbelbeschlag nach einem der Ansprüche 1 bis 6, bei dem an der Grundplatte (11) mindestens ein hervorstehender Zentrierbolzen (13) angeordnet ist.

8. Möbel mit mindestens zwei Möbelteilen, **dadurch gekennzeichnet, dass** zum Verbinden der mindestens zwei Möbelteile wenigstens ein Möbelbeschlag gemäß einem der Ansprüche 1 bis 7 vorgesehen ist.

## Claims

1. Furniture fitting for connecting furniture parts, in particular upholstered furniture, having a base element (10) which can be fastened to a first furniture part and a cover plate (20) which can be fastened to a second furniture part, wherein
- the base element (10) has a base plate (11) to which a projecting clamping element (17) is rotatably fastened, and
- the cover plate (20) has a recess (203), wherein
- the clamping element (17) projects at least partially through the recess (203) in at least one rotational position when the base element (10) and the cover plate (20) are joined together, and wherein
- the clamping element (17) engages over the cover plate (20) at least in sections in the region of the recess (203) after a rotation and thus connects the cover plate (20) to the base element (10) in a form-fitting and force-fitting manner,
wherein a pivot lever (15) projecting laterally beyond the base element (10) is coupled in a rotationally fixed manner to the clamping element (17), **characterized in that**
the clamping element (17) and the pivot lever (15) are rotatably mounted on the base plate (11) by means of a rivet (14) and are coupled to one another in a rotationally fixed manner via the rivet (14), wherein the rivet (14) has a polygonal section (142) and is guided through polygonal openings (172, 152) of the clamping element (17) and of the pivot lever (15).

2. Furniture fitting according to claim 1, in which at least one raised support (12) for the cover plate (20) is provided on the base plate (11).

3. Furniture fitting according to claim 2, in which the raised support (12) is formed in an edge region of the base plate (11), wherein at least one pivoting region of the pivot lever (15) is recessed.

4. Furniture fitting according to one of claims 1 to 3, in which guide bevels are provided on the clamping element (17) and/or the recess (203) of the cover plate (20).

5. Furniture fitting according to claim 4, in which at least one side edge of the recess (203) and/or of the clamping element (17) is provided with a bevel (204, 173).

6. Furniture fitting according to claim 4 or 5, in which the clamping element (17) has at least one radially outwardly facing clamping wing (171) which is beveled and/or inclined relative to the base plate (11).

7. Furniture fitting according to one of claims 1 to 6, in which at least one protruding centering bolt (13) is arranged on the base plate (11).

8. Furniture having at least two furniture parts, **characterized in that** for connecting the at least two furniture parts at least one furniture fitting according to one of claims 1 to 7 is provided.

## Revendications

1. Quincaillerie destinée à assembler des parties de meuble, en particulier des meubles rembourrés, avec un élément de base (10) pouvant être fixé à une première partie de meuble et une plaque de recouvrement (20) pouvant être fixée à une deuxième partie de meuble, dans laquelle
- l'élément de base (10) présente une plaque de base (11) sur laquelle un élément de serrage (17) en saillie est fixé de manière rotative et
- la plaque de recouvrement (20) présente un évidement (203), dans lequel
- l'élément de serrage (17) fait saillie au moins partiellement à travers l'évidement (203) dans au moins une position de rotation lors de l'assemblage de l'élément de base (10) et de la plaque de recouvrement (20), et dans lequel
- l'élément de serrage (17), après une rotation, recouvre au moins par sections la plaque de recouvrement (20) dans la zone de l'évidement (203) et relie ainsi la plaque de recouvrement (20) à l'élément de base (10) par complémentarité de forme et de force,
un levier pivotant (15) dépassant latéralement de l'élément de base (10) étant couplé fixement en rotation avec l'élément de serrage (17), **caractérisée en ce que**
l'élément de serrage (17) et le levier pivotant (15) sont montés rotatifs sur la plaque de base (11) au moyen d'un rivet (14) et sont couplés l'un à l'autre de manière fixe en rotation par l'intermédiaire du rivet (14), le rivet (14) présentant une section polygonale (142) et étant guidé à travers des ouvertures polygonales (172, 152) de l'élément de serrage (17) et du levier pivotant (15).

2. Quincaillerie selon la revendication 1, dans laquelle au moins un appui surélevé (12) pour la plaque de recouvrement (20) est prévu sur la plaque de base (11).

3. Quincaillerie selon la revendication 2, dans laquelle l'appui surélevé (12) est formé dans une zone de bordure de la plaque de base (11), au moins une zone de pivotement du levier pivotant (15) étant évidée.

4. Quincaillerie selon l'une des revendications 1 à 3, dans laquelle des biseaux sont prévus sur l'élément de serrage (17) et/ou sur l'évidement (203) de la plaque de recouvrement (20).

5. Quincaillerie selon la revendication 4, dans laquelle au moins un bord latéral de l'évidement (203) et/ou de l'élément de serrage (17) est doté d'un chanfrein (204, 173).

6. Quincaillerie selon la revendication 4 ou 5, dans laquelle l'élément de serrage (17) présente au moins une aile de serrage (171) orientée radialement vers l'extérieur, qui est biseautée et/ou placée en biais par rapport à la plaque de base (11).

7. Quincaillerie selon l'une des revendications 1 à 6, dans laquelle au moins un boulon de centrage (13) en saillie est disposé sur la plaque de base (11).

8. Meuble comprenant au moins deux parties de meuble, **caractérisé en ce que** pour assembler les au moins deux parties de meuble, au moins une quincaillerie est prévue selon l'une des revendications 1 à 7.
